# EUROPÄISCHE PATENTANMELDUNG

(11) **EP 0 910 939 A1**
(43) Veröffentlichungstag der Anmeldung: **28.04.1999**
(21) Anmeldenummer: 98117952.6
(22) Anmeldetag: 22.09.1998
(51) Int. Cl.: A01C 17/00

(54) **Schleuderstreuer**

(30) Priorität: 15.10.1997 DE 19745440; 06.11.1997 DE 19748876
(71) Anmelder: Amazonen-Werke H. Dreyer GmbH & Co. KG, D-49205 Hasbergen (DE)
(72) Erfinder: Dreyer, Heinz, Dr. Dipl.-Ing., 49205 Hasbergen (DE); Scheufler, Bernd, Dr. Dipl.-Ing., 49205 Hasbergen (DE)

(57) **Zusammenfassung**

Schleuderstreuer mit zumindest einem Vorratsbehälter und zumindest zwei Dosierorganen, die das sich im Vorratsbehälter befindliche Material in einstellbaren Mengen jeweils einer rotierend angetriebenen und mit Wurfschaufeln besetzten Schleuderscheibe zuführen. Jeder Schleuderscheibe ist ein eigener Hydraulikmotor zugeordnet, wobei eine Regeleinrichtung zum Einstellen der Drehzahl der die Schleuderscheibe antreibenden Hydraulikmotoren vorgesehen ist. Den Dosierorganen ist eine Einstelleinrichtung zugeordnet, wobei mittels dieser Einstelleinrichtung die jeder Schleuderscheibe zugeleitete Materialmenge in gemeinsamer und/oder unabhängiger Weise einstellbar und/oder verstellbar ist.

## Beschreibung

Die Erfindung betrifft einen Schleuderstreuer gemäß der Oberbegriffe der Patentansprüche 1 bis 3.

Derartige Schleuderstreuer sind bekannt. Durch diese Schleuderstreuer wird das auszubringende Material über die Schleuderscheiben breitflächig verteilt. Es besteht in der Praxis der Wunsch, vom Schleppersitz aus den Schleuderstreuer während der Arbeit auf verschiedene Arbeitsbreiten einstellen zu können, wobei ebenfalls eine Änderung der Ausbringmenge in einfacher Weise möglich sein soll.

Der Erfindung liegt die Aufgabe zugrunde, hier auf einfache Weise Abhilfe zu schaffen.

Hierzu ist bei einem Schleuderstreuer gemäß des Oberbegriffes des Patentanspruches 1 vorgesehen, daß jeder Schleuderscheibe ein eigener Hydraulikmotor zugeordnet ist, daß eine Regeleinrichtung zum Einstellen der Drehzahl der die Schleuderscheibe antreibenden Hydraulikmotoren vorgesehen ist, daß den Dosierorganen eine Einstelleinrichtung zugeordnet ist, daß mittels dieser Einstelleinrichtung die jeder Schleuderscheibe zugeleitete Materialmenge in gemeinsamer und/oder unabhängiger Weise einstellbar und/oder verstellbar ist. Infolge dieser Maßnahmen wird in überraschend einfacher Weise erreicht, daß der Schleuderstreuer auf alle in der Praxis vorkommenden Gegebenheiten in einfacher Weise fernbedienbar und/oder mittels geeigneter Einstellmittel durch ein elektronisches Bordcomputersystem eingestellt werden kann.

Bei einem Schleuderstreuer gemäß des Oberbegriffes des Anspruches 2 ist vorgesehen, daß jeder Schleuderscheibe ein eigener Hydraulikmotor zugeordnet ist, daß eine Regeleinrichtung zum Einstellen der Drehzahlen der die Schleuderscheibe antreibenden Hydraulikmotoren vorgesehen ist. Bei diesem Schleuderstreuer kann so in einfacher Weise für jede Arbeitsbreite und Einsatzfall der Schleuderscheiben eingestellt werden, um so eine einfache Anpassung an die in der Praxis vorkommenden Gegebenheit zu erreichen.

Desweiteren ist bei einem Schleuderstreuer gemäß des Oberbegriffes des Patentanspruches 3 vorgesehen, daß den Dosierorganen eine Einstelleinrichtung zugeordnet ist, daß mittels dieser Einstelleinrichtung die jeder Schleuderscheibe zugeordnete Materialmenge in gemeinsamer und/oder unabhängiger Weise einstellbar und/oder verstellbar ist. Somit lassen sich in Teilbreiten die Ausbringmengen in einfacher Weise variieren.

Die die verschiedenen Materialsorten verteilenden Schleuderscheiben können in unterschiedlichen Höhen zueinander angeordnet sein. Auch ist es möglich, die Schleuderscheiben auf gleicher Höhe und/oder in einer Reihe quer zur Fahrtrichtung nebeneinander anzuordnen.

Desweiteren ist erfindungsgemäß vorgesehen, daß bei einer Änderung der Drehzahl der Schleuderscheiben automatisch über eine Verstellung der Dosierorgane eine Änderung der der Schleuderscheibe zugeführten Materialmenge erfolgt. Infolge dieser Maßnahmen kann bei einer Reduzierung der Arbeitsbreite die Ausbringmenge pro Flächeneinheit konstant gehalten werden. Hierbei ist vorteilhaft, daß die Einstelleinrichtung für die Dosierorgane mit der Regeleinrichtung zum Einstellen der Drehzahlen der die Schleuderscheibe antreibenden Hydraulikmotoren mittels eine elektronischen Bordcomputersystems verbunden ist. Hierdurch wird durch das Bordcomputersystem automatisch die erforderliche Einstellung des Streuers für die jeweiligen Einsatzbedingungen vorgenommen.

Desweiteren können in dem Bordcomputersystem Applikationskarten hinterlegt sein, anhand welcher in Verbindung mit einem Standortbestimmungssystem automatisch die Maschine entsprechend eingestellt wird, so daß in vorgegebener Weise das Material entsprechend der auf den Applikationskarten hinterlegten Daten ausgebracht wird.

Zur Einstellung des Schleuderstreuers vom Normalstreuen auf das Grenzstreuen ist vorgesehen, daß das Bordcomputersystem derartig ausgebildet ist, daß in einem ersten Schritt zur Einstellung des Grenzstreuens die Drehzahl der der Grenze zugewandten Schleuderscheibe und die dieser Schleuderscheibe zugeführten Materialmenge reduziert wird. Infolge dieser Maßnahme wird ein Streubild mit einer zur Grenze hin relativ steilabfallenden Streuflanke erzielt, wobei gleichzeitig sichergestellt wird, daß im Grenzbereich nicht zu viel Material ausgebracht wird. Um eine weitere Reduzierung der Grenzstreubreite bzw. Anpassung an spitz zulaufenden Grenzstreifen zu erreichen, ist vorgesehen, daß in einem zweiten und evtl. dritten Schritt wahlweise nur die Drehzahl der Schleuderscheibe reduziert wird oder gleichzeitig auch eine entsprechende Mengenreduzierung erfolgt. Hierbei kann jedoch das Bordcomputersystem auch so ausgelegt sein, daß auch in den weiteren Schritten nicht nur die Drehzahl sondern zusätzlich aus die Ausbringmenge reduziert wird. Dieses hängt von den Gegebenheiten ab, beispielsweise ob Rand- oder Grenzstreuen durchgeführt wird.

In einfacher Weise läßt sich die Umstellung von Normalstreuen auf Grenzstreuen bzw. die Anpassung an die Grenzstreuabstände dadurch erreichen, daß das Bordcomputersystem ein und/oder mehrere Tasten aufweist, mittels welcher die Drehzahl und/oder die Ausbringmenge reduzierbar ist. Desweiteren kann das Bordcomputersystem eine Taste zum Umstellen von Grenzstreuen auf Normalstreuen aufweisen.

Um ein ordnungsgemäßes Ausbringen von Material sicherzustellen, ist vorgesehen, daß das Bordcomputersystem nach Beenden des Grenzstreuens auf Normalstreuen umschaltbar ist, und daß bei einem Nichtumschalten von Grenzstreuen auf Normalstreuen ein Warnelement vorgesehen ist, welches ein Warnsignal abgibt. Hierbei kann in Weiterbildung vorgesehen sein, daß das Bordcomputersystem automatisch nach Beenden des Grenzstreuens, wenn die Dosierorgane zum Wendevorgang abgeschaltet werden und nach dem Wendevorgang wieder eingeschaltet werden, auf die Einstellparameter für die Drehzahl der Schleuderscheiben und die Ausbringmenge für Normalstreuen umschaltet.

Desweiteren ist vorgesehen, daß Mittel zur Verstellung der Aufgabefläche des Materials auf die Schleuderscheiben vorgesehen sind. Dieses kann erforderlich sein, wenn in einer großen Bandbreite die Arbeitsbreite bzw. die Grenzstreubreite geändert werden muß, um eine ausreichend gleichmäßige Materialverteilung sicherzustellen. Hierbei kann vorgesehen sein, daß den Mitteln zur Aufgabenflächenverstellung Einstellmittel zugeordnet sind, die mit dem Bordcomputersystem verbunden sind.

Desweiteren ist vorgesehen, daß die Rührorgane jeweils beim Abschalten des zugehörigen Dosierorgans stillsetzbar und/oder abschaltbar sind. Dieses ist vor allem dann wichtig, wenn über eine längere Fahrstrecke einige Dosierorgane stillallem dann wichtig, wenn über eine längere Fahrstrecke einige Dosierorgane still- bzw. abgeschaltet und die anderen Dosierorgane Material zuführen, so daß bei dem abgeschalteten Dosierorgan keine Materialzerstörung durch das Rührorgan stattfindet.

Beim Einsatz eines Schleuderstreuers ist vorgesehen, daß jeder Schleuderscheibe ein eigener regelbarer Hydraulikmotor zugeordnet ist, daß den Dosierorganen jeweils eine eigene Einstellvorrichtung zum Ein- und Abschalten der Materialzuführung zu der zugehörigen Schleuderscheibe zugeordnet ist, daß die Grobeinstellung der Arbeitsbreite bzw. die Grobabstufung der Arbeitsbreite des Schleuderstreuers in vorzugsweise vier Stufenbereichen über die Ein- und Abschaltung der Dosierorgane erfolgt, und daß die Feineinstellung bzw. Feinabstufung der Arbeitsbreite mittels der Drehzahlvariation der Schleuderscheiben erfolgt. Infolge dieser Maßnahmen läßt sich in einfacher Weise vom Schleppersitz aus quasi eine stufenlose Reduzierung bzw. Vergrößerung der Arbeitsbreite des Schleuderstreuers erreichen.

Desweiteren ist vorgesehen, daß bei einer Änderung der Arbeitsbreite durch Drehzahlvariation der Schleuderscheibe bzw. der Schleuderscheiben während des Ausbringvorganges jeweils eine Anpassung der Ausbringmenge durch Einstellung der zugehörigen Dosierorgane erfolgt. Hierdurch wird sichergestellt, daß die gewünschte Ausbringmenge pro Flächeneinheit ausgebracht wird. Desweiteren kann vorgesehen sein, daß ein Bordcomputersystem vorgesehen ist, mittels welchem die Einstell- und/oder Einschalt- bzw. Abschaltvorgänge erfolgen.

Weitere Einzelheiten der Erfindung sind den übrigen Ansprüchen, der Beispielsbeschreibung und den Zeichnungen zu entnehmen. Hierbei zeigen
- Fig.1: den Schleuderdüngerstreuer in der Ansicht von hinten und in Prinzipdarstellung,
- Fig.2: den Schleuderdüngerstreuer gemäß Fig.1 in Seitenansicht und in Prinzipdarstellung,
- Fig.3: einen weiteren Schleuderdüngerstreuer in der Ansicht von hinten und in Prinzipdarstellung,
- Fig.4: den Schleuderdüngerstreuer gemäß Fig.3 in Seitenansicht,
- Fig.5: einen weiteren Schleuderdüngerstreuer in der Ansicht von hinten und in Prinzipdarstellung und
- Fig.6: den Schleuderdüngerstreuer gemäß Fig.4 in Seitenansicht.

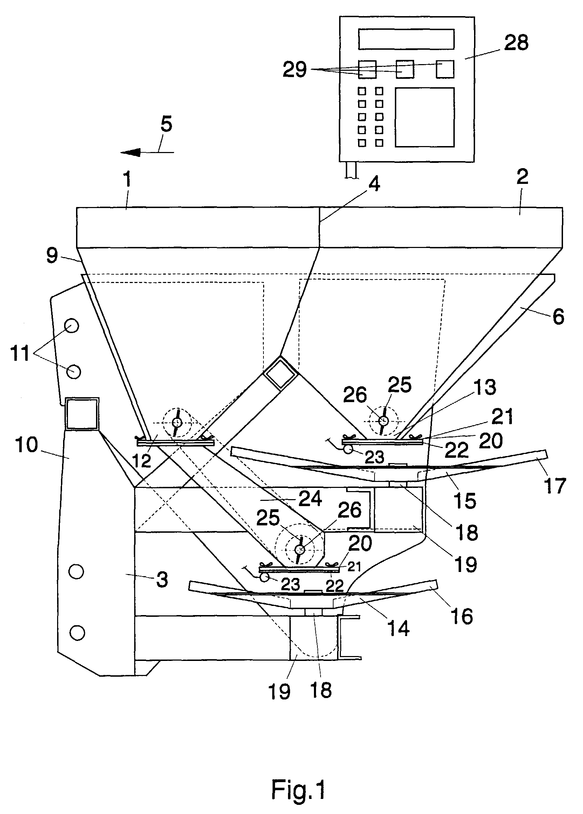

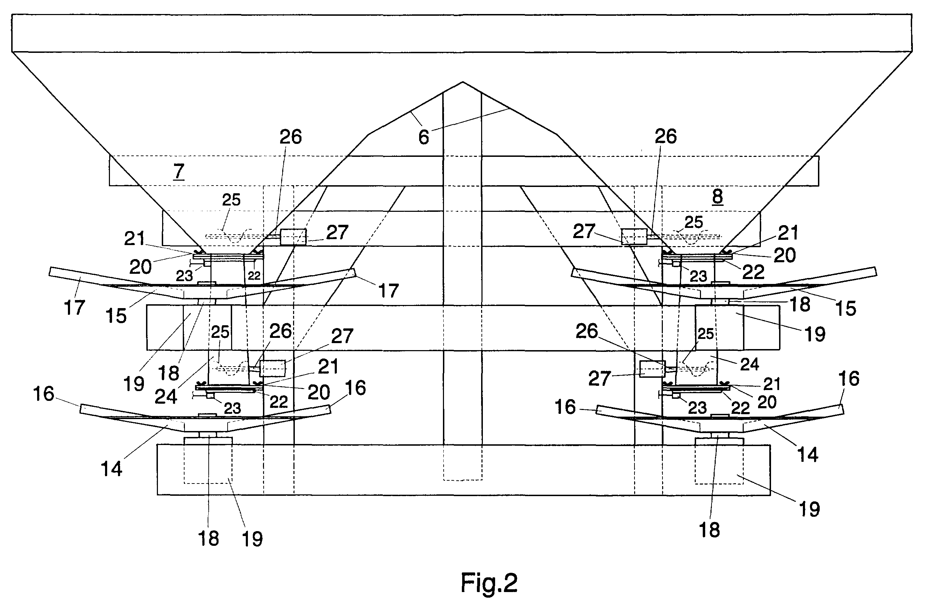

Der Schleuderdüngerstreuer gemäß den Fig.1 und 2 weist die beiden hintereinander angeordneten Vorratsbehälter 1 und 2 sowie den Rahmen 3 auf. Die beiden Vorratsbehälter 1 und 2 sind durch die Trennwand 4 voneinander getrennt. Die beiden Vorratsbehälter 1 und 2 sind durch das in Fahrtrichtung 5 sich erstreckende dachförmige Mittelteil 6 jeweils im unteren Bereich in die Auslauftrichter 7 bzw. 8 aufgeteilt. Auf der Vorderseite 9 des vorderen Vorratsbehälters 1 ist ein den Schleuderdüngerstreuer tragender Dreipunktanbaurahmen 10, der Teil des Rahmens 3 ist, angeordnet. Aufgrund seiner durchgehenden Ausbildung liegt das dachförmige Mittelteil 6 der beiden Vorratsbehälter 1 und 2 liegt auf gleicher Höhe. Der obere Bereich des dachförmigen Mittelteils 6 ist auf seiner Vorderseite mit dem Dreipunktanbaurahmen 10 im Höhenbereich des oberen Dreipunktanlenkpunktes 11 des Dreipunktanbaurahmens 10 verbunden.

Jedem unteren Trichterende 12 und 13 der Vorratsbehälter 1 und 2 ist eine Schleuderscheibe 14 bzw. 15 mit darauf angeordneten Wurfschaufeln 16 bzw. 17 zugeordnet. Die Wurfschaufeln 16 bzw. 17 können in Scheibenebene mit unterschiedlichen Winkeln zur Radialen eingestellt werden, um so durch die unterschiedliche Winkelanstellung der Wurfschaufeln 16 bzw. 17 für unterschiedliche Materialsorten und Arbeitsbreiten eine gleichmäßige Düngerverteilung erzielen zu können. Hierbei können je nach Einsatzverhältnissen die Schleuderscheiben 14 mit den Wurfschaufeln 16 und die Schleuderscheiben 15 mit den Wurfschaufeln 17 unterschiedlich ausgebildet sein, wie in den Fig. 1-4 gezeigt, oder wahlweise gleich ausgebildet sein. Die Einstellung auf die unterschiedlichen Arbeitsbreiten und Streustreifenbereiche erfolgt durch die Einstellung der Drehzahl für die jeweilige Schleuderscheibe und/oder der Einstellung der Aufgabefläche des Materials auf die jeweilige Schleuderscheibe.

Weiterhin kann vorgesehen sein, daß verschieden ausgebildete Wurfschaufel- oder Schleuderscheibensätze zur Anpassung an verschiedene Arbeitsbreiten- und Streubreitenbereiche zum Einsatz kommen.

Die Schleuderscheiben 14 bzw. 15 sind aus diesem Grunde auswechselbar auf ihren Antriebswellen 18 angeordnet. Die Schleuderscheiben 14 bzw. 15 werden mittels Hydraulikmotoren 19 angetrieben.

Den Trichterenden 12 und 13 sind Dosierorgane 20 zugeordnet. Den Trichterenden 13 des hinteren Vorratsbehälters 2 sind als Bodenplatten 21 mit Auslauföffnungen, die über Schieber 22 mittels Einstelleinrichtungen 23 in ihrer Öffnungsweite einzustellen und zu verschließen sind, ausgebildete Dosierorgane zugeordnet.

Den vorderen Trichterenden 12 ist jeweils ein das Material von den Trichterenden 12 zu den Schleuderscheiben 14 leitendes Leitelement 24 zugeorndet. Dieses Leitelement ist als Zuführschacht mit an dessen unteren Enden angeordnetem Dosierorgan 20 ausgebildet. Der Zuführschacht 24 erweitert sich stetig nach unten. Dieses Dosierorgan 20 weist eine Bodenplatte 21 mit Auslauföffnung auf. Die Auslauföffnung ist über einen Schieber 22 mittels Einstelleinrichtungen 23 in ihrer Öffnungsweite einstellbar und verschließbar.

Oberhalb jeder Bodenplatte 21 ist jeweils ein Rührorgan 25 auf einer Rührwelle 26 angeordnet. Auch dem vorderen Trichterende 12 ist eine Rührwelle 26 mit Rührelementen zugeordnet. Die Rührwellen 26 werden jeweils über einen Hydraulikmotor 27 in bekannter und daher nicht näher erläuterter Weise angetrieben.

Den Hydraulikmotoren 19 sind nicht dargestellte Regeleinrichtungen zum Einstellen der Drehzahl der die Schleuderscheibe antreibenden Hydraulikmotoren zugeordnet. Über diese Regeleinrichtungen kann die Drehzahl für alle Schleuderscheiben 14, 15 in gleicher Größe, jedoch auch in unterschiedlicher Größe eingestellt werden. Über die den Dosierorganen 20 zugeordneten Einstelleinrichtungen 23 ist die jeder Schleuderscheibe 14, 15 zugeleitete Materialmenge aus den Vorratsbehältern 1 bzw. 2 in gemeinsamer oder unabhängiger Weise einstellbar.

Die Einstellung der Drehzahlen der Schleuderscheiben 14, 15 über die Hydraulikmotoren 19 und der zugeordneten Regeleinrichtung erfolgt in vorteilhafter Weise über ein elektronisches Bordcomputersystem 28. Über dieses Bordcomputersystem 28 sind die Einstellwerte abrufbar. In dem Bordcomputersystem 28 sind die Einstelldaten für den Schleuderstreuer sowie Applikationskarten abgespeichert.

Hierbei sind in dem Bordcomputersystem 28 die Drehzahlen der Schleuderscheiben 14, 15 und die Einstellung der Dosierorgane 20 über die Einstelleinrichtung 23 und somit die Ausbringmengen abgespeichert. Hierbei können Funktionsdaten in der Weise hinterlegt sein, daß bei einer Änderung der Drehzahl der Schleuderscheiben 14, 15 automatisch über eine Verstellung der Dosierorgane 20 durch die Einstelleinrichtungen 23 eine Änderung der erfolgt.

Desweiteren ist das Bordcomputersystem 28 derart ausgebildet, daß in einem ersten Schritt zur Einstellung des Grenzstreuen die Drehzahl der der Grenze zugewandten Schleuderscheibe 14, 15 und die dieser Schleuderscheibe 14, 15 zugeführten Materialmenge reduziert wird. Hierdurch wird eine steil abfallende Streuflanke im Grenzbereich erreicht. Durch die Reduzierung der Ausbringmenge wird eine Überdüngung im Randbereich ausgeschlossen. In einem zweiten und evtl. dritten Schritt kann dann die Drehzahl der Schleuderscheibe 14, 15 und evtl. zusätzlich aus die Ausbringmenge reduziert werden. Hierzu weist das Bordcomputersystem 28 eine oder mehrere Tasten 29 auf, mittels welcher die einzelnen Schritte einleitbar sind, so daß die Drehzahl der Schleuderscheiben und/oder die Ausbringmenge reduziert wird.

Desweiteren weist das Bordcomputersystem 28 eine Taste 29 zum Umstellen von Grenzstreuen auf Normalstreuen auf. Hierbei werden die entsprechend im Bordcomputersystem 28 hinterlegten Daten abgerufen, so daß eine automatische Einstellung erfolgt.

Desweiteren wird das Bordcomputersystem 28 nach Beenden des Grenzstreuen auf Normalstreuen umgeschaltet. Dieses Umschalten kann durch einen Tastendruck geschehen. Hierbei ist dann vorgesehen, daß bei einem Nichtumschalten von Grenzstreuen auf Normalstreuen ein Warnelement vorgesehen ist, welches ein Warnsignal abgibt, so daß der Bediener dann entsprechend umschalten kann.

Es ist jedoch auch möglich, daß das Bordcomputersystem 28 automatisch nach Beenden des Grenzstreuens, wenn die Dosierorgane 20 zum Wendevorgang abgeschaltet werden und nach dem Wendevorgang wieder eingeschaltet werden, auf die Einstellparameter für die Drehzahl der Schleuderscheiben 14, 15 und die Ausbringmenge für das Normalstreuen umschaltet. Diese Umschaltung kann über das Bordcomputersystem 28 auch in Abhängigkeit von Applikationskarte in Verbindung mit einem Standortbestimmungssystem erfolgen.

Desweiteren können nicht dargestellte Mittel zur Verstellung der Aufgabefläche des Material auf die Schleuderscheiben 14, 15 vorgesehen sein, wobei diesen Mitteln zur Aufgabenflächenverstellung Einstellmittel zugeordnet sind, die mit dem Bordcomputersystem 28 verbunden sind. Eine Einstellung der Aufgabefläche bzw. Verstellung der Aufgabefläche des Materials auf die Schleuderscheiben 14, 15 kann bei einer Arbeitsbreitenveränderung erforderlich sein, um auch unter allen vorkommenden Streubedingungen eine gleichmäßige Materialverteilung zu erhalten.

Desweiteren können die Rührorgane 25 jeweils beim Abschalten des zugehörigen Dosierorgans 20 mittels entsprechender Einrichtungen stillgesetzt bzw. abgeschaltet werden Dieses geschieht durch Abschalten der Hydraulikmotore 27.

Desweiteren lassen sich für den Schleuderstreuer verschiedene Arbeitsbreiten auf einfache Weise einstellen. Die mit Wurfschaufeln 16, 17 besetzten Schleuderscheiben 14, 15 verteilen das von den Dosierorganen 20 zugeführte Material in einander angrenzenden, sich teilweise überlappenden Streubahnen breitflächig auf der Bodenoberfläche. Da die Schleuderscheiben 14, 15 von eigenen regelbaren Hydraulikmotoren 19 angetrieben werden, läßt sich die Drehzahl entsprechend reduzieren, so daß eine Arbeits- und Wurfweitenvariation möglich ist. Desweiteren kann durch das Ein- und Abschalten der Materialzuführung zu der jeweiligen Schleuderscheibe 14, 15 über die den Dosierorganen mittels der zugeordneten Einstellvorrichtung 23 die Arbeitsbreite in Teilbreiten reduziert werden. Hierbei wird eine Grobeinstellung der Arbeitsbreite bzw. die Grobabstufung der Arbeitsbreite des Schleuderstreuers in vier Stufenbereichen durch das Ein- und Abschalten der Dosierorgane 20 erreicht, während die Feineinstellung bzw. Feinabstufung der Arbeitsbreite mittels der Drehzahlvariation der Schleuderscheiben 14, 15 erfolgt. Hierbei läßt sich somit durch das entsprechende Zu- und Abschalten einer Schleuderscheibe 14, 15 und der Drehzahlvariation der Schleuderscheiben 14, 15 eine stufenlose Arbeitsbreiteneinstellung über den gesamten Arbeitsbreitenbereich von beispielsweise 12 bis 48 m durchführen. Diese Einstellungen können beispielsweise über das Bordcomputersystem 28, in welchem die entsprechenden Funktionsdaten hinterlegt sind, vorgenommen werden.

Hierbei kann in dem Bordcomputersystem 28 eine derartige Funktionsdatenverknüpfung hinterlegt sein, daß bei einer Änderung der Arbeitsbreite durch Drehzahlvariation der Schleuderscheibe bzw. der Schleuderscheiben 14, 15 während des Ausbringvorganges jeweils eine Anpassung der Ausbringmenge durch Einstellung der zugehörigen Dosierorgane 20 erfolgt.

Außerdem läßt sich durch die getrennte Ansteuerung der den Dosierorganen 20 zugeordneten Einstelleinrichtungen 23 die Ausbringmenge in Teilbreiten verändern; also eine Teilbreiten bestimmte ± Schaltung realisieren.

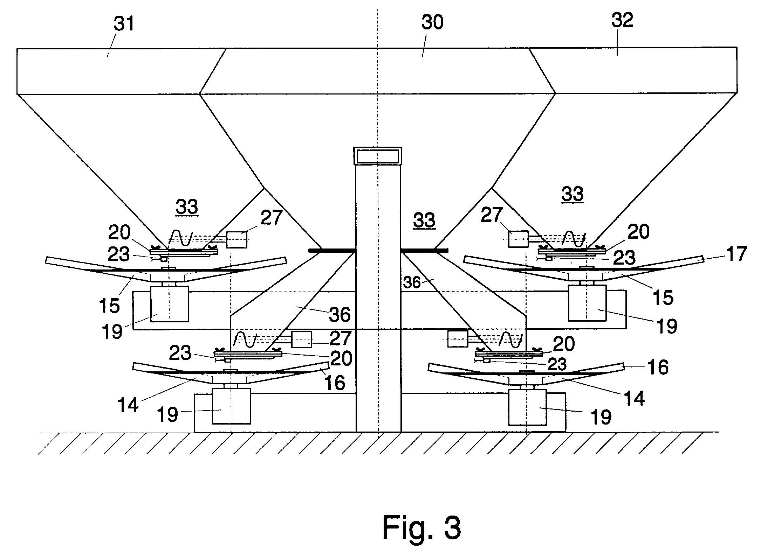

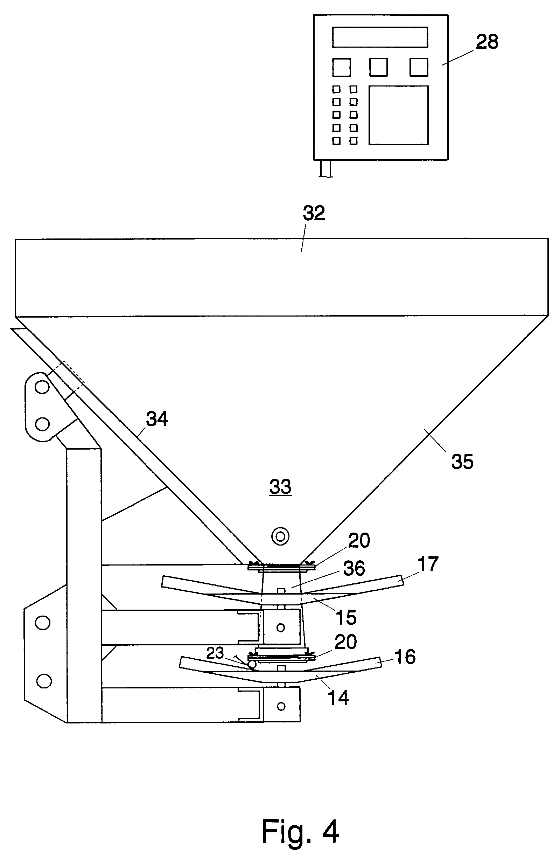

Der Schleuderdüngerstreuer gemäß den Fig.3 und 4 unterscheidet sich von dem Schleuderdüngerstreuer gemäß den Fig.1 und 2 zunächst dadurch, daß die Vorratsbehälter 30, 31 und 32 nicht hintereinander sondern nebeneinander angeordnet sind. Hierbei ist ein mittlerer Vorratsbehälter 30 und zwei seitlich zu dem mittleren Vorratsbehälter 30 angeordnete Vorratsbehälter 31 und 32 vorgesehen. Die unteren Trichterenden 33 der Vorratsbehälter 30, 31 und 32 liegen auf gleicher Höhe. Die vorderen und hinteren Trichterwände 34 und 35 der Vorratsbehälter 30, 31 und 32 fluchten in Seitenansicht gesehen miteinander.

Den unteren Enden 33 der Vorratsbehälter 30, 31 und 32 sind Dosierorgane 20 zugeordnet, die das Material den diesen Vorratsbehältern 30, 31 und 32 zugeordneten Schleuderscheiben 14, 15, die mit Wurfschaufeln 16, 17, die in Scheibenebene in unterschiedlichen Winkelanstellung einstellbar sind, zuführen. Die den äußeren Vorratsbehältern 31 und 32 zugeordneten Schleuderscheiben 15 sind höher angeordnet als die dem mittleren Vorratsbehälter 30 zugeordneten Schleuderscheiben 15. Die den unteren Trichterenden 33 des mittleren Vorratsbehälters 30 zugeordneten Schleuderscheiben 14 sind die das von den unteren Trichterenden 33 zu den unteren Schleuderscheiben 15 leitenden und als Zuleitungsschächte 36 ausgebildete Leitelemente zugeordnet. An dem unteren Ende jedes Zuleitungsschachtes 36 befindet sich ein Dosierorgan 20. Die Zuleitungsschächte 36 sind von den Trichterenden 33 des mittleren Vorratsbehälters 30 zur Seite und nach unten geführt.

Die Dosierorgane 20 entsprechen den Dosierorganen gemäß dem Schleuderstreuer in Fig.1 und 2.

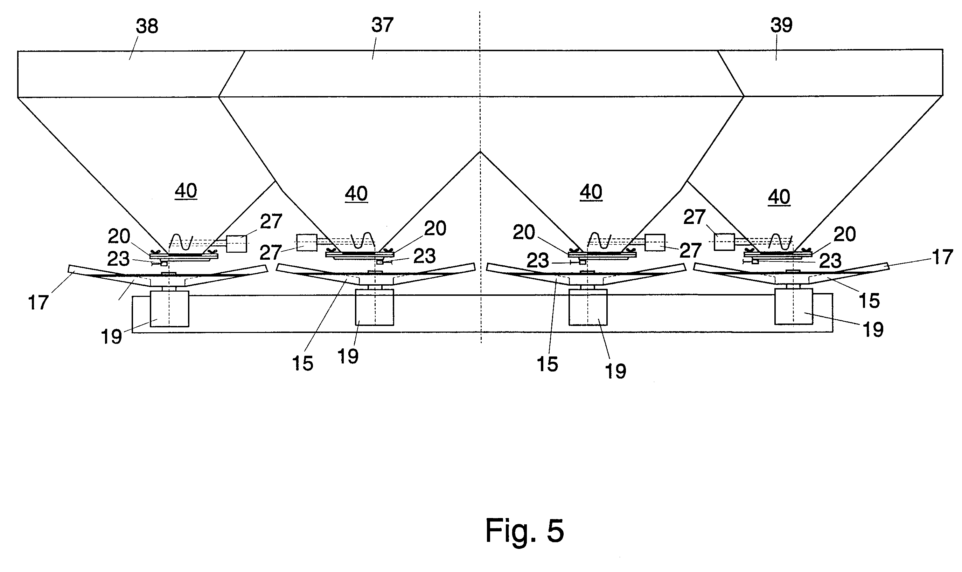

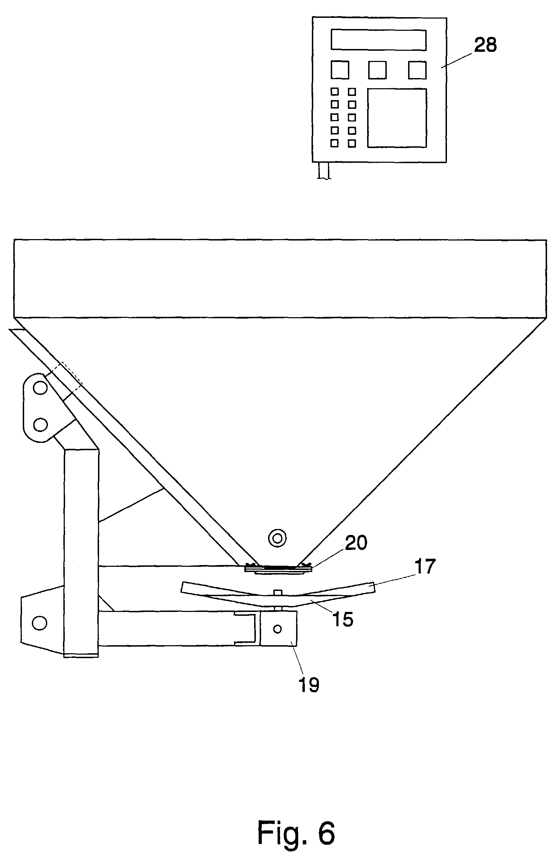

Der Schleuderdüngerstreuer gemäß den Fig.5 und 6 unterscheidet sich von dem Schleuderstreuer gemäß den Fig.1 und 2 zunächst dadurch, daß die Vorratsbehälter 37, 38 und 39 nebeneinander angeordnet sind. Die unteren Trichterenden 40 liegen auf gleicher Höhe. Den unteren Enden 40 der Vorratsbehälter 37, 38 und 39 sind Dosierorgane 20 zugeordnet, die das Material den diesen Vorratsbehältern 37, 38 und 39 zugeordneten Schleuderscheiben 15 mit Wurfschaufeln 17, die in Scheibenebene in unterschiedlichen Winkelanstellungen einstellbar sein können, zuführen. Sämtliche Schleuderscheiben 15 mit den Wurfschaufeln 17 der den einzelnen Vorratsbehältern zugeordnet sind, sind gleich ausgebildet. Die unterschiedlichen Wurfweiten und Arbeitsbreiten der einzelnen Schleuderscheiben bzw. des Schleuderdüngerstreuers werden durch unterschiedliche Drehzahlen der Schleuderscheiben 15, die über die Hydraulikmotoren 19, die mit einer Regeleinrichtung verbunden sind und über ein Bordcomputersystem 28 gesteuert und geregelt werden, realisiert. Oberhalb der Dosierorgane sind Rührorgane angeordnet, die über die Hydraulikmotoren 27 angetrieben werden.

Desweiteren sind den Dosierorganen 20 die Einstelleinrichtungen 23 zugeordnet. Weiterhin kann den Dosierorganen bzw. den Schleuderscheiben 15 Einstellvorrichtungen zugeordnet sein, mittels welcher die Aufgabefläche des von den Dosierorganen auf den Schleuderscheiben aufgebenen Materials einstellbar bzw. veränderbar ist, um ebenfalls eine Einstellung der Wurfweite und Streugutverteilung durchzuführen.

## Patentansprüche

1. Schleuderstreuer mit zumindest einem Vorratsbehälter und zumindest zwei Dosierorganen, die das sich im Vorratsbehälter befindliche Material in einstellbaren Mengen jeweils einer rotierend angetriebenen und mit Wurfschaufeln besetzten Schleuderscheibe zuführen, dadurch gekennzeichnet, daß jeder Schleuderscheibe (14, 15) ein eigener Hydraulikmotor (19) zugeordnet ist, daß eine Regeleinrichtung zum Einstellen der Drehzahl der die Schleuderscheibe (14, 15) antreibenden Hydraulikmotoren (19) vorgesehen ist, daß den Dosierorganen (20) eine Einstelleinrichtung (23) zugeordnet ist, daß mittels dieser Einstelleinrichtung (23) die jeder Schleuderscheibe (14, 15) zugeleitete Materialmenge in gemeinsamer und/oder unabhängiger Weise einstellbar und/oder verstellbar ist.

2. Schleuderstreuer mit vorzugsweise zumindest zwei Vorratsbehältern, insbesondere für die getrennte Mitführung von beispielsweise zumindest zwei verschiedenen Materialsorten, wobei jedem Vorratsbehälter jeweils zumindest zwei eigene Dosierorgane und zumindest zwei eigene angetriebene, mit Wurfschaufeln besetzte Schleuderscheiben zugeordnet sind, wobei das jeweilige Dosierorgan der ihr zugeordneten Schleuderscheibe das auszubringende Material in einstellbarer Weise zuleitet, wobei die verschiedenen Materialsorten von jeweils verschiedenen Schleuderscheiben verteilt werden, dadurch gekennzeichnet, daß jeder Schleuderscheibe (14, 15) ein eigener Hydraulikmotor (19) zugeordnet ist, daß eine Regeleinrichtung zum Einstellen der Drehzahl der die Schleuderscheibe (14, 15) antreibenden Hydraulikmotoren (19) vorgesehen ist.

3. Schleuderstreuer mit vorzugsweise zumindest zwei Vorratsbehältern, insbesondere für die getrennte Mitführung von beispielsweise zumindest zwei verschiedenen Materialsorten, wobei jedem Vorratsbehälter jeweils zumindest zwei eigene Dosierorgane und zumindest zwei eigene angetriebene, mit Wurfschaufeln besetzte Schleuderscheiben zugeordnet sind, wobei das jeweilige Dosierorgan der ihr zugeordneten Schleuderscheibe das auszubringende Material in einstellbarer Weise zuleitet, wobei die verschiedenen Materialsorten von jeweils verschiedenen Schleuderscheiben verteilt werden, dadurch gekennzeichnet, daß den Dosierorganen (20) eine Einstelleinrichtung (23) zugeordnet ist, daß mittels dieser Einstelleinrichtung (23) die jeder Schleuderscheibe (14, 15) zugeleitete Materialmenge in gemeinsamer und/oder unabhängiger Weise einstellbar und/oder verstellbar ist.

4. Schleuderstreuer nach einem oder mehreren der vorstehenden Ansprüche, dadurch gekennzeichnet, daß bei einer Änderung der Drehzahl der Schleuderscheiben (14, 15) automatisch über eine Verstellung der Dosierorgane (20) eine Änderung der der Schleuderscheibe (14, 15) zugeführten Materialmenge erfolgt.

5. Schleuderstreuer nach einem oder mehreren der vorstehenden Ansprüche, dadurch gekennzeichnet, daß die Einstelleinrichtung (23) für die Dosierorgane (20) mit der Regeleinrichtung zum Einstellen der Drehzahlen der die Schleuderscheibe (14, 15) antreibenden Hydraulikmotoren (19) mittels eines elektronischen Bordcomputersystems (28) verbunden ist.

6. Schleuderstreuer nach einem oder mehreren der vorstehenden Ansprüche, dadurch gekennzeichnet, daß das Bordcomputersystem (28) derart ausgebildet ist, daß in einem ersten Schritt zur Einstellung des Grenzstreuens die Drehzahl der der Grenze zugewandten Schleuderscheibe (14, 15) und die dieser Schleuderscheibe (14, 15) zugeführten Materialmenge reduziert wird.

7. Schleuderstreuer nach Anspruch 6, dadurch gekennzeichnet, daß in einem zweiten und evtl. dritten Schritt nur die Drehzahl der Schleuderscheibe (14, 15) reduziert wird.

8. Schleuderstreuer nach Anspruch 6 und/oder 7, dadurch gekennzeichnet, daß das Bordcomputersystem (28) eine und/oder mehrere Tasten (29) aufweist, mittels welcher die Drehzahl und/oder die Ausbringmenge reduzierbar ist.

9. Schleuderstreuer nach einem oder mehreren der vorstehenden Ansprüche 6 bis 8, dadurch gekennzeichnet, daß das Bordcomputersystem (28) eine Taste (29) zum Umstellen von Grenzstreuen auf Normalstreuen aufweist.

10. Schleuderstreuer nach einem oder mehreren der vorstehenden Ansprüche, dadurch gekennzeichnet, daß das Bordcomputersystem (28) nach Beenden des Grenzstreuens auf Normalstreuen umschaltbar ist, daß bei einem Nichtumschalten von Grenzstreuen auf Normalstreuen ein Warnelement vorgesehen ist, welches eine Warnung abgibt.

11. Schleuderstreuer nach einem oder mehreren der vorstehenden Ansprüche, dadurch gekennzeichnet, daß das Bordcomputersystem (28) automatisch nach Beenden des Grenzstreuens, wenn die Dosierorgane (20) zum Wendevorgang abgeschaltet werden und nach dem Wendevorgang wieder eingeschaltet werden, auf die Einstellparameter für die Drehzahl der Schleuderscheiben (14, 15) und die Ausbringmenge für Normalstreuen umschaltet.

12. Schleuderstreuer nach einem oder mehreren der vorstehenden Ansprüche, dadurch gekennzeichnet, daß Mittel zur Verstellung der Aufgabefläche des Materiales auf die Schleuderscheiben (14, 15) vorgesehen sind.

13. Schleuderstreuer nach einem oder mehreren der vorstehenden Ansprüche, dadurch gekennzeichnet, daß Mittel zur Aufgabeflächenverstellung Einstellmittel zugeordnet sind, die mit dem Bordcomputersystem (28) verbunden sind.

14. Schleuderstreuer nach einem oder mehreren der vorstehenden Ansprüche, dadurch gekennzeichnet, daß die Rührorgane (25) jeweils beim Abschalten des zugehörigen Dosierorgans (20) stillsetzbar und/oder abschaltbar sind.

15. Verfahren zum Einsatz eines Schleuderstreuers mit zumindest einem Vorratsbehälter und zumindest vier Dosierorganen, die das sich im Vorratsbehälter befindliche Material in einstellbaren Mengen jeweils einer rotierend angetriebenen und mit Wurfschaufeln besetzten Schleuderscheibe zuführen, die das zugeführte Material in einander angrenzenden, sich teilweise überlappenden Streubahnen breitflächig verteilen, dadurch gekennzeichnet, daß jeder Schleuderscheibe (14, 15) ein eigener regelbarer Hydraulikmotor (19) zugeordnet ist, daß den Dosierorganen (20) jeweils eine eigene Einstellvorrichtung (23) zum Ein- und Abschalten der Materialzuführung zu der zugehörigen Schleuderscheibe (14, 15) zugeordnet ist, daß die Grobeinstellung der Arbeitsbreite bzw. die Grobabstufung der Arbeitsbreite des Schleuderstreuers in vorzugsweise vier Stufenbereichen über die Ein- und Abschaltung der Dosierorgane (20) erfolgt, und daß die Feineinstellung bzw. Feinabstufung der Arbeitsbreite mittels der Drehzahlvariation der Schleuderscheiben (14, 15) erfolgt.

16. Verfahren nach Anspruch 15, dadurch gekennzeichnet, daß bei einer Änderung der Arbeitsbreite durch Drehzahlvariation der Schleuderscheibe (14, 15) bzw. der Schleuderscheiben (14, 15) während des Ausbringvorganges jeweils eine Anpassung der Ausbringmenge durch Einstellung der zugehörigen Dosierorgane erfolgt.

17. Verfahren nach Anspruch 15 und/oder 16, dadurch gekennzeichnet, daß ein Bordcomputersystem (28) vorgesehen ist, mittels welchem die Einstell- und/oder Einschalt- bzw. Abschaltvorgänge erfolgen.
